# FASCICULE DE BREVET EUROPEEN

(11) **EP 0 878 287 B1**
(45) Date de publication et mention de la délivrance du brevet: **25.09.2002**
(21) Numéro de dépôt: 97440044.2
(22) Date de dépôt: 12.05.1997
(51) Int. Cl.: B29C 57/04, B29C 55/24

(54) **Dispositif d'expansion pour réaliser des emboîtures aux extrémités de tuyaux en matière plastique, ou complexe plastique-aluminium**
Aufweitungsvorrichtung zum Formen von Muffen an Kunststoff- oder Kunststoff/Aluminium-Rohrenden
Expanding device for forming bells at plastic or plastic/aluminium tube ends

(43) Date de publication de la demande: 18.11.1998
(73) Titulaire: VIRAX S.A., F-51206 Epernay Cédex (FR)
(72) Inventeur: Tandart, Jean-Marie, 51200 Epernay (FR)
(74) Mandataire: Rhein, Alain

(56) Documents cités:
- EP-A- 0 718 057
- WO-A-94/18486
- CH-A- 475 078
- FR-A- 2 738 512

## Description

La présente invention a pour objet un dispositif d'outil d'expansion pour pince à réaliser des emboîtures aux extrémités de tuyaux en matière plastique utilisés dans le domaine de la plomberie.

Le métal, notamment le cuivre, utilisé pour la fabrication des tuyaux, est petit-à-petit remplacé par la matière plastique ou un complexe plastique-aluminium.

L'aboutement des tuyaux en matière plastique, ou complexe plastique-aluminium, est réalisé au moyen de raccords métalliques sur lesquels les extrémités desdits tuyaux sont emboîtées.

En pratique, l'extrémité du tuyau est évasée temporairement au moyen d'une pince à emboîture, puis emboîtée sur le raccord, l'élasticité de la matière assurant la solidarisation, laquelle est généralement complétée par une bague externe.

Une pince à emboîture comporte un outil à expansion de forme cylindrique, constitué du rapprochement de mors en forme de secteur mobiles dans le sens radial, et une aiguille conique qui, lors du rapprochement des branches de ladite pince, s'insère axialement entre lesdits mors, provoquant leur écartement et ainsi l'évasement de l'extrémité du tuyau dans lequel ledit outil aura été préalablement introduit.

L'outil à expansion, couramment utilisé pour réaliser des emboîtures dans des tuyaux en cuivre, présente des inconvénients lorsqu'il est utilisé pour des tuyaux en matière plastique ou complexe plastique-aluminium.

En effet, lors de l'expansion, les mors s'écartent les uns des autres créant ainsi des gorges dans lesquelles pénètre la matière du fait de l'élasticité de cette dernière, et les arêtes relativement aiguës des mors s'enfoncent dans ladite matière, ce qui la fragilise et peut générer des fuites.

Pour pallier cet inconvénient il a été proposé, notamment dans le document EP-A-0 718 057, de casser les arêtes des mors par la réalisation de chanfreins créant un angle d'ouverture entre deux mors voisins qui soit de préférence compris entre 50° et 70°, ou bien d'arrondir lesdites arêtes.

Si ces outils permettent d'éviter l'enfoncement de la matière plastique par les arêtes des mors, ils n'en présentent pas moins d'autres inconvénients.

En effet, lors de l'évasement de l'extrémité du tuyau, c'est-à-dire lors de l'éloignement des mors les uns des autres, l'ouverture entre deux mors voisins est plus importante que celle d'un outil de type classique, la surface d'appui des mors sur la paroi interne du tuyau est moins grande, ainsi la déformation est plus large et plus profonde, en sorte qu'il est nécessaire de réaliser un évasement d'un diamètre plus grand, avec le risque d'un étirement trop important, ce qui peut fragiliser le tuyau ou diminuer ses caractéristiques élastiques.

La présente invention a pour but de remédier à ces divers inconvénients, en proposant un dispositif d'outil permettant la réalisation d'une emboîture sans fragilisation du tuyau.

Le dispositif d'outil selon la présente invention est de forme générale cylindrique, constitué du rapprochement de mors en forme de secteur, mobiles dans le sens radial sous l'action d'une aiguille conique susceptible de s'insérer axialement entre eux, et il se caractérise essentiellement en ce que la surface de travail de chacun desdits mors présente au niveau de chacun de ses bords longitudinaux un plat faisant un angle droit avec le côté dudit mors, adjacent à ladite surface de travail.

Les avantages et les caractéristiques de la présente invention ressortiront plus clairement de la description qui suit et qui se rapporte au dessin annexé, lequel en représente un mode de réalisation non limitatif.

Dans le dessin annexé :
- la figure 1 représente une vue partielle en perspective d'une pince à emboîture et du dispositif d'outil selon l'invention.
- la figure 2 représente une vue en coupe selon un plan diamétral du même dispositif d'outil.
- la figure 3a représente une vue schématique partielle d'un dispositif d'outil d'expansion existant lors de la réalisation d'une emboîture.
- la figure 3b représente une vue schématique partielle d'un autre dispositif d'outil d'expansion existant lors de la réalisation d'une emboîture.
- la figure 3c représente une vue schématique partielle d'un dispositif d'outil d'expansion selon l'invention lors de la réalisation d'une emboîture.

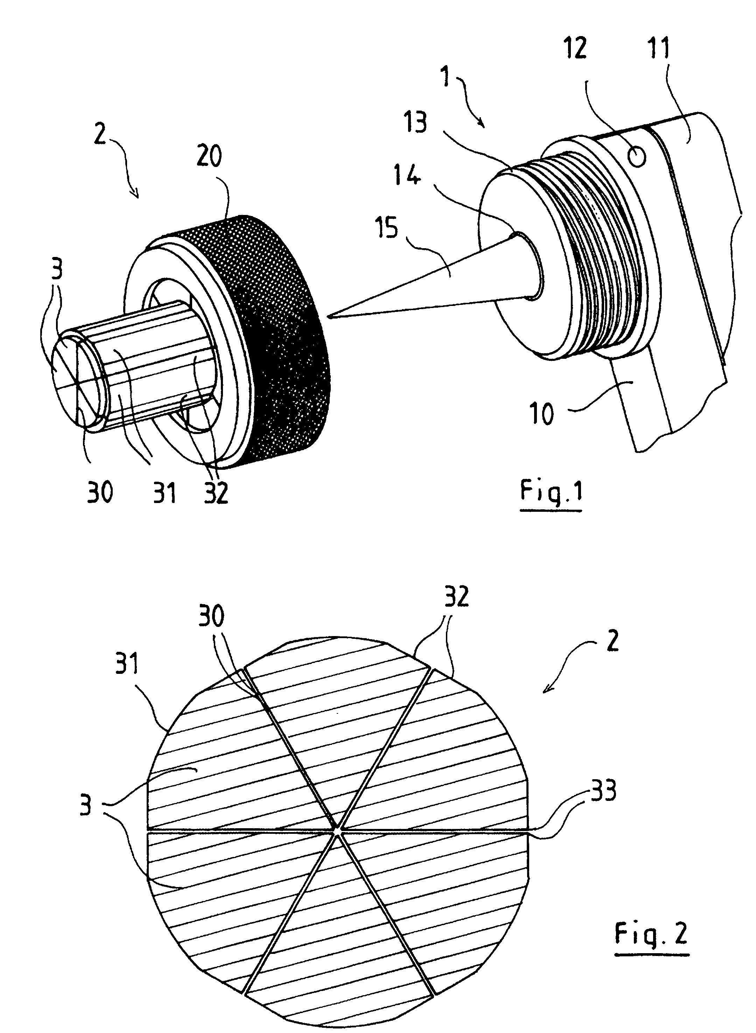

Si on se réfère à la figure 1, on peut voir qu'une pince 1 à réaliser des emboîtures comprend de manière connue deux branches 10 et 11 articulées l'une à l'autre par une extrémité autour d'un axe transversal 12, la branche avant 10 comportant un embout fileté 13 percé axialement d'ouverture 14 traversée par une aiguille conique 15 solidaire de l'extrémité de la branche arrière 11, et susceptible lors du manoeuvrement des branches 10 et 11 de faire saillie de l'embout 13.

On peut voir également un outil 2 à réaliser les expansions, qui comporte de manière connue une douille 20 d'adaptation sur l'embout 13, et des mors 3 en forme de secteur.

Les mors 3 sont issus de la découpe d'un cylindre selon des plans radiaux, en sorte qu'ils présentent chacun deux côtés plats 30 formant un angle, en l'occurrence de 60° puisque l'outil 2 comporte six mors 3, et une surface extérieure de travail 31.

Les mors 3 sont rappelés élastiquement les uns vers les autres au moyen de ressorts, non visibles, disposés dans la douille 20, l'insertion de l'aiguille conique 15 entre les mors 3 permettant d'écarter ceux-ci pour réaliser une emboîture.

Si on se réfère également à la figure 2, on peut voir que selon l'invention, la surface de travail 31 de chaque secteur 3 n'est pas complètement courbe, mais qu'elle présente à chacun de ses bords longitudinaux un plat 32 qui fait un angle droit avec le côté 30 adjacent.

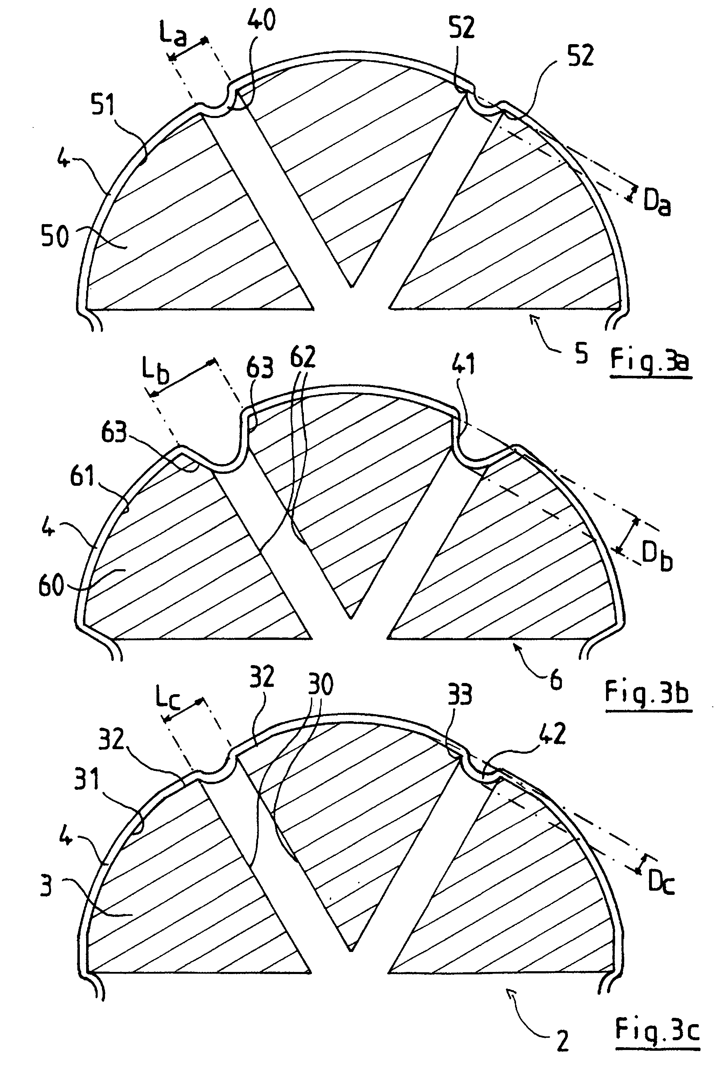

Si on se réfère maintenant à la figure 3a, on peut voir la réalisation d'une emboîture à l'extrémité dans un tuyau 4 au moyen d'un outil 5 de type classique, c'est-à-dire qu'il 1 comporte des mors 50 en forme de secteur dont la surface de travail 51 est entièrement courbe.

Lors de l'écartement des mors 50, la matière plastique constituant le tuyau 4 pénètre entre les mors 50 créant une déformation 40 d'une profondeur Dₐ et d'une largeur Lₐ, avec pour inconvénient un risque d'enfoncement de la matière par les arêtes 52 des mors 50, jusqu'à créer des zones déformées plastiquement.

Si on se réfère maintenant à la figure 3b, on peut voir la réalisation d'une emboîture à l'extrémité dans un tuyau 4 au moyen d'un outil 6 du type de celui décrit dans le document EP-A-0 718 057, c'est-à-dire comportant des mors 60 également en forme de secteur, mais dont les arêtes, entre la surface de travail 61 et les côtés 62, sont cassées par la réalisation de chanfreins 63.

Lors de l'expansion du tuyau 4, la matière plastique du tuyau 4 pénètre entre les mors 60 sans enfoncement de la matière du fait des chanfreins 63, par contre il se crée des déformations 41 d'une profondeur D_{b} supérieure à la profondeur Dₐ, et d'une largeur L_{b} très supérieure à la largeur Lₐ.

D'autre part, la zone de contact entre les mors 60 et le tuyau 4 étant plus petite que dans le cas d'un outil classique 5, et l'énergie de déformation de la matière pour atteindre l'emboîture adéquate étant constante, la réalisation d'une emboîture au moyen de l'outil 6 nécessite un effort plus important qu'avec un outil classique 5.

Si on se réfère maintenant à la figure 3c, on peut voir la réalisation d'une emboîture à l'extrémité dans un tuyau 4 au moyen d'un dispositif d'outil 2 selon l'invention.

Lors de l'expansion du tuyau 4, il se crée une déformation 42 de la matière qui s'aplatit sur les plats 32 et qui pénètre entre les mors 3.

Du fait de l'alignement des plats 32, la traction est exercée selon deux directions coplanaires opposées, et la pénétration de la matière entre les mors 3 est moins importante que dans le cas d'un outil classique 5, d'autre part, il y a moins d'enfoncement de la matière par les arêtes 33, que dans le cas d'un outil classique 5, et la largeur L_{c} de la déformation 42 est équivalente à celle d'un outil classique 5.

La zone de contact entre les mors 3 et le tuyau 4 est équivalente à celle d'un outil classique 5, et l'effort nécessaire à la réalisation de l'emboîture est équivalent à celui nécessité avec un outil classique 5.

Toutefois, en tenant compte de l'aplatissement de la surface de travail 31 au niveau des plats 32, la profondeur D_{c} des déformations 42 peut être supérieure à celle Dₐ obtenue avec un outil classique 5.

Le dispositif d'outil selon l'invention permet ainsi de réaliser une emboîture présentant des déformations de profondeur sensiblement égale à la profondeur de celles réalisées avec un outil classique, tout en évitant des risques de fragilisation de la matière.

On notera que la fabrication peut avantageusement être complétée d'une abrasion des arêtes 33 des mors, par une opération de tonnelage par exemple.

## Revendications

1. Dispositif d'outil d'expansion pour pince à réaliser des emboîtures aux extrémités de tuyaux en matière plastique, ou complexe plastique-aluminium utilisés dans le domaine de la plomberie, ledit outil (2), de forme générale cylindrique, est constitué du rapprochement de mors (3) en forme de secteur, mobiles dans le sens radial sous l'action d'une aiguille conique (15) susceptible de s'insérer axialement entre eux, et il est **caractérisé en ce que** la surface de travail (31) de chacun desdits mors (3) présente au niveau de chacun de ses bords longitudinaux un plat (32) faisant un angle droit avec le côté (30) dudit mors (3) adjacent à ladite surface de travail (31).

2. Dispositif selon la revendication 1 **caractérisé en ce que** les arêtes (33) des mors (3) sont abrasées.

## Patentansprüche

1. Aufweitungswerkzeugvorrichtung für eine Spannbüchse, zum Formen von Muffen an Kunstoff- oder Kunstoff/Aluminium-Rohrenden, für Verwendung im Bereich der Klempnerarbeiten, wobei das genannte Werkzeug (1) einer im allgemeinen zylindrischen Gestalt durch Zusammenrücken von sektorförmigen Spannbackeneinsätzen (3) gebildet ist, die in Radialrichtung beweglich sind unter dem Einfluß einer kegelförmigen Nadel (15), geeignet, zwischen diese letzten eingefügt zu werden, und **dadurch gekennzeichnet, daß** die Arbeitsfläche (31) jedes genannten Spannbackeneinsatzes (3) im Bereich jeder ihrer Längskanten eine Flachstelle (32) aufweist, die zur Seite (30) des genannten, neben der gennanten Arbeitsfläche (31) liegenden Spannbackeneinsatzes (3) rechtwinklig ist.

2. Vorrichtung nach Anspruch 1, **dadurch gekennzeichnet, daß** die Kanten (33) der Spannbackeneinsätze (3) abgeschliffen sind.

## Claims

1. Expanding tool device for a clamp, for forming bells at plastic or plastic/aluminium tube ends, used in the field of plumbing, said tool (1), of a general cylindrical shape, being formed by nearing sector-like chuck jaws (3), movable in the radial direction under the action of a conical needle (15) capable of being axially inserted between them, and **characterised in that** the working surface (31) of each of said chuck jaws (3) has, at the level of each of its longitudinal edges, a flat surface (32) forming a right angle with the side (30) of said chuck jaw (3) adjacent to said working surface (31).

2. Device according to claim 1, **characterised in that** the edges (33) of the chuck jaws (3) are abraded.
